# EUROPÄISCHE PATENTANMELDUNG

(11) **EP 4 279 291 A1**
(43) Veröffentlichungstag der Anmeldung: **22.11.2023**
(21) Anmeldenummer: 23174001.0
(22) Anmeldetag: 17.05.2023
(51) Int. Cl.: B42D 25/435, B41J 2/44, B42D 25/41, B23K 26/00

(54) **VORRICHTUNG ZUR BEARBEITUNG VON DOKUMENTEN**

(30) Priorität: 19.05.2022 DE 102022112629; 19.05.2022 DE 102022112628
(71) Anmelder: MB Automation GmbH & Co. KG, 93426 Roding (DE)
(72) Erfinder: Roch, Julia, 09221 Neukirchen/Erzgebirge (DE)
(74) Vertreter: noventive Patentanwaltsgesellschaft mbH

(57) **Zusammenfassung**

Die vorliegende Erfindung betrifft eine Vorrichtung zur Bearbeitung von Dokumenten (Dokumentenbearbeitungssystem (10)), insbesondere von Sicherheitsdokumenten. Das erfindungsgemäße Dokumentenbearbeitungssystem (10) weist wenigstens eine Dokumententrägervorrichtung (12) mit einer Dokumentenaufnahme (121), dazu konfiguriert ein zu bearbeitendes Dokument (51) aufzunehmen und zu transportieren, und eine Dokumentenbearbeitungseinrichtung, dazu konfiguriert das Dokument (51) in einem bestimmten Bearbeitungsbereich (82) zu bearbeiten, auf, wobei die Dokumententrägervorrichtung (12) dazu ausgebildet ist, das Dokument (51) in zwei Raumrichtungen zu bewegen.

## Beschreibung

Die Erfindung betrifft eine Vorrichtung zur Bearbeitung von Dokumenten (Dokumentenbearbeitungssystem), insbesondere von Sicherheitsdokumenten. Das Dokumentenbearbeitungssystem ist dabei insbesondere zur Personalisierung von Dokumenten vorgesehen. Die zu bearbeitenden Dokumente können hierbei insbesondere kartenartige oder buchartige Dokumente und insbesondere Sicherheitsdokumente, wie etwa Ausweisdokumente oder Kreditkarten, Bankkarten, Mitgliedskarten und ähnliches, sein.

Aus dem Stand der Technik ist eine Vielzahl verschiedener Typen von personalisierten Dokumenten, insbesondere in Kartenform oder Buchform bekannt. So gehören beispielsweise buchartige Passdokumente oder einzelne Seiten davon (z.B. die sog. "Pass- Inhaberseite" oder Papierseiten), Ausweiskarten und viele Arten von personalisierten Chipkarten, etwa Bankkarten, Kreditkarten, Ausweiskarten, Mitgliedskarten, Zugangsberechtigungskarten usw. oder personenbezogene (meist kartenförmige) Etiketten jeweils zur Gruppe der personalisierten Dokumente.

Dabei bedeutet "Personalisierung" bzw. "personalisiert", dass das entsprechende Dokument eine dokumentenindividuelle Information enthält oder trägt, die typischerweise einem Inhaber des Dokuments zugeordnet ist. So kann die Information etwa in einigen Fällen den Inhaber identifizieren, beispielsweise anhand seines Namens, seines Passfotos, einer Identitätsnummer oder anderer Merkmale, die auf dem Dokument aufgedruckt, anderweitig aufgebracht oder eingebracht oder in ihm, insbesondere in Form von Daten, gespeichert sind. Die Personalisierung kann dabei insbesondere individuell auf eine einzelne Person bezogen sein oder aber auch auf eine bestimmte begrenzte Gruppe von Personen, beispielsweise Mitarbeiter eines Unternehmens.

Das Bearbeiten der Dokumente zum Versehen derselben mit dokumentenindividueller und/oder nicht dokumentenindividueller Information kann dabei insbesondere mittels Druckens, mittels Gravur oder, insbesondere im Falle einer Kunststoffoberfläche, mittels gezielter lokaler Verfärbung des Oberflächenmaterials des Dokuments, insbesondere in Graustufen bzw. Abstufungen davon, durch Energieeinwirkung, insbesondere mittels eines geeigneten Lasers erfolgen.

In der Offenlegungsschrift DE 10 2006 031 024 A1 sind ein Dokumentenbearbeitungssystem und ein Verfahren zum Bedrucken von Sicherheitsdokumenten beschrieben. Das Dokumentenbearbeitungssystem umfasst dabei eine Druckeinheit zum Bedrucken eines in einem Druckbereich befindlichen Sicherheitsdokuments und eine Zuführeinheit zum nacheinander Zuführen der Sicherheitsdokumente in den Druckbereich. Die Zuführeinheit weist dabei mehrere verfahrbare Dokumententräger (Dokumententrägervorrichtung) auf, um ein zu bedruckendes Sicherheitsdokument aufzunehmen und in den Druckbereich und aus dem Druckbereich zu verfahren. Die Vorrichtung weist zudem eine Antriebseinrichtung auf, um die Dokumententräger entlang einer Zuführungsrichtung auf verschiedenen senkrecht zur Zuführungsrichtung angeordneten Ebenen zu verfahren. Sie weist des Weiteren eine Steuereinheit zum Ansteuern der Antriebsvorrichtung auf, sodass die mehreren Dokumententräger jeweils im Wechsel zwischen einer Aufnahmeposition, in der ein Sicherheitsdokument aufgenommen wird, und dem Druckbereich bewegt werden. Dies erfolgt so, dass die Antriebseinrichtung die mehreren Trägereinrichtungen beim Verfahren in Zuführrichtung auf den verschiedenen Ebenen aneinander vorbeiführt.

Um die Fälschungssicherheit von Sicherheitsdokumenten zu erhöhen, werden Sicherheitsmerkmale in das Dokument eingearbeitet. Ein weit verbreitetes Sicherheitsmerkmal wird dabei durch ein so genanntes "Kippbild" realisiert, was auch unter den Abkürzungen "MLI" oder "CLI" für "Laser Image" (englisch) bekannt ist. Ein Kippbild, welches beim Kippen des Dokuments um die horizontale Achse sichtbar wird, wird als MLI bezeichnet, während ein Kippbild, welches beim Kippen des Dokuments um die dazu um 90° gedrehte vertikale Achse sichtbar wird, als CLI bezeichnet wird.

Ein derartiges Kippbild weist in der Regel entlang seiner lateralen Ausdehnung eine Linsenstruktur als optisch wirksame Abbildungsstruktur auf und ist mit einer in der Linsenstruktur hinterlegten Informationsstruktur realisiert. Somit wird die eingebrachte Information lediglich dann sichtbar, wenn Lichtstrahlen durch die Linsenstruktur im richtigen Winkel gebrochen werden. Je nach Betrachtungsrichtung ist ein Bild also sichtbar oder nicht bzw. nur stark abgeschwächt sichtbar. Derartige Kippbilder sind beispielsweise als Sicherheitsmerkmale auf Kunststoffkarten und Ausweispapieren angebracht. Der Vorteil ist durch eine relativ einfache visuelle Prüfbarkeit der Kippbilder begründet, welche selbst bei einfachen Lichtverhältnissen gegeben ist. Ein solches Kippbild ist beispielsweise in der Patentschrift EP 0 219 012 A2 offenbart. Zur Erhöhung der Fälschungssicherheit können zusätzlich Relieflinsen vorgesehen sein, wie beispielsweise in der Patentschrift EP 0 216 947 A1 offenbart.

Zur Herstellung derartiger Kippbilder werden Laser in einem Dokumentenbearbeitungssystem eingesetzt, welche über Spiegelanordnungen auf das Dokument gerichtet werden können, um so das Kippbild auf das Sicherheitsdokument aufzubringen. Im Fall, dass mehrere Kippbilder an unterschiedlichen Positionen, oder, dass sowohl ein MLI-Kippbild als auch ein CLI-Kippbild auf das Dokument aufgebracht werden sollen, muss zunächst das Dokument aus dem Dokumentenbearbeitungssystem entfernt und die entsprechende Spiegelanordnung umgerüstet (Positions-, und/oder Ausrichtungsveränderung) werden, um mit der Bearbeitung fortfahren zu können. Häufig ist zudem ein Testlauf der geänderten Anordnung notwendig, um die Funktionsfähigkeit sicherzustellen. Der gesamte Vorgang ist somit zeit- und kostenintensiv.

Der vorliegenden Erfindung liegt somit die Aufgabe zugrunde ein Dokumentenbearbeitungssystem bereitzustellen, welches eine verbesserte Handhabung bei der Bearbeitung von Dokumenten, insbesondere bei der Einbringung von Sicherheitsmerkmalen in Form von Kippbildern, gewährleistet. Zudem ist es Aufgabe der vorliegenden Erfindung ein Verfahren zur Bearbeitung eines Dokuments anhand des erfindungsgemäßen Dokumentenbearbeitungssystems bereitzustellen.

Diese Aufgabe wird durch die Gegenstände der nebengeordneten Ansprüche gelöst. Vorteilhafte Weiterbildungen der Erfindung sind in den Unteransprüchen enthalten.

Eine erfindungsgemäße Ausführungsform eines Dokumentenbearbeitungssystems zur Bearbeitung von Dokumenten, insbesondere Sicherheitsdokumenten, weist wenigstens eine Dokumententrägervorrichtung mit einer Dokumentenaufnahme auf, wobei die Dokumententrägervorrichtung dazu ausgebildet ist ein zu bearbeitendes Dokument aufzunehmen und zu transportieren. Im Rahmen dieser Anmeldung ist unter dem "Aufnehmen eines Dokuments" zu verstehen, dass dieses in die Dokumentenaufnahme eingelegt und insbesondere von diesem fixiert werden kann. Die Dokumentenaufnahme kann dabei insbesondere als Vertiefung in einer Fläche vorgesehen sein, wobei die Abmessungen der Vertiefung exakt den Abmessungen des aufzunehmenden Dokuments entspricht. Durch eine derartige Vertiefung wird das Dokument zudem gegen eine horizontale Verschiebung auf der Dokumententrägervorrichtung fixiert. Andere Möglichkeiten der formschlüssigen Fixierung oder beispielsweise durch Unterdruck oder durch den Druck einer von oben auf das Dokument aufgesetzten Maske, welche das Dokument in die Dokumentenaufnahme drückt, sind ebenfalls denkbar.

Die Dokumententrägervorrichtung ist dazu eingerichtet insbesondere durch einen Aktuator im Dokumentenbearbeitungssystem bewegt zu werden und somit das Dokument zu transportieren.

Weiterhin weist das Dokumentenbearbeitungssystem eine Dokumentenbearbeitungseinrichtung auf, welche dazu ausgebildet ist, das Dokument in einem bestimmten Bearbeitungsbereich zu bearbeiten. Im Rahmen der Anmeldung ist unter der Bearbeitung eines Dokuments das Einbringen eines sichtbaren Elements zu verstehen, welches personenbezogene dokumentenbezogene Daten wie Name, Geburtsdatum oder Passfoto und/oder sichtbare Sicherheitsmerkmale, wie insbesondere Kippbilder, umfasst. Dabei können die aufzubringenden Daten selbst auch als Sicherheitsmerkmal vorgesehen werden.

Die Dokumententrägervorrichtung ist dazu ausgebildet, das Dokument in zwei Raumrichtungen zu bewegen bzw. transportieren. Unter zwei Raumrichtungen werden zwei nichtparallele Richtungen verstanden, welche eine Ebene aufspannen. Insbesondere bevorzugt sind dabei zwei Raumrichtungen, welche sich in der horizontalen Ebene befinden. Durch die Bewegung in zwei Raumrichtungen in der horizontalen Ebene, kann das Dokument somit durch die Dokumententrägervorrichtung an jeden Punkt des Bearbeitungsbereichs bewegt werden. Somit kann ein sichtbares Element an jeder Position des Dokuments aufgebracht werden. Ebenso ist es möglich auch mehrere sichtbare Elemente an verschiedenen Positionen des Dokuments einzubringen, ohne die Anordnung der Dokumentenbearbeitungseinrichtung, insbesondere von möglicherweise vorgesehenen Spiegelanordnungen, zu ändern.

In einer bevorzugten Ausführungsform der Erfindung weist die Dokumentenbearbeitungseinrichtung wenigstens eine Strahlenquelle, insbesondere einen Laser auf, welche dazu vorgesehen ist ein Sicherheitsmerkmal in Form eines Kippbilds auf das Dokument aufzubringen.

In einer weiteren vorteilhaften Ausführungsform des erfindungsgemäßen Dokumentenbearbeitungssystems mit einer Strahlenquelle, emittiert diese Laserstrahlen in einem viereckigen, insbesondere rechteckigen, trapezförmigen, rautenförmigen oder quadratischen Bearbeitungsbereich. Der Bearbeitungsbereich ist dabei definiert durch die Fläche, welche durch die Laserstrahlen der Strahlenquelle erreicht werden können. Dabei weist das zu bearbeitende Dokument ebenfalls eine viereckige, insbesondere rechteckige, quadratische, parallelogrammförmige Form auf, wobei der Bearbeitungsbereich gegenüber dem Dokument um einen definierten Winkel, insbesondere 45 Grad, gedreht ist. Durch die Drehung kann insbesondere in Verbindung mit der Verwendung von Spiegelanordnungen, durch welche die Laserstrahlen auf das Dokument reflektiert werden, eine maximale Ausnutzung des Bearbeitungsfelds auf dem Dokument erreicht werden.

Dabei ist vorteilhafterweise wenigstens eine erste Spiegelanordnung vorgesehen, welches dazu ausgebildet ist, die von der Strahlenquelle emittierte Strahlung jeweils unter einem ersten definierten Winkel und/oder aus einer ersten definierten Richtung auf das Dokument zu leiten. Wie eingangs beschrieben ist ein Kippbild wie beispielsweise ein CLI- oder MLI-Element ein weit verbreitetes Sicherheitsmerkmal, welches optisch leicht überprüft werden kann. Durch das Dokumentenbearbeitungssystem der oben beschriebenen Ausführungsform kann ein Kippbild an verschiedenen Positionen des Dokuments vorgesehen werden, ohne eine aufwendige Umrüstung bzw. Änderung der Ausrichtung der Spiegelanordnung vorzunehmen.

In einer weiteren vorteilhaften Ausführungsform weist die Dokumentenbearbeitungseinrichtung weiterhin eine zweite Spiegelanordnung auf, welche ebenfalls dazu ausgebildet ist, die von der Strahlenquelle emittierte Strahlung jeweils unter einem zweiten definierten Winkel und/oder aus einer zweiten definierten Richtung auf das Dokument zu leiten. Dabei ist die zweite definierte Richtung der zweiten Spiegelanordnung um 90 Grad versetzt zur ersten Richtung der ersten Spiegelanordnung angeordnet. Durch die versetzte Anordnung, wird durch die zweite Spiegelanordnung also die Strahlung der Strahlenquelle auch um 90 Grad versetzt auf das Dokument aufgebracht. Somit können mit der einen Spiegelanordnung MLI-Kippbilder und mit der anderen Spiegelanordnung CLI-Kippbilder auf die Oberfläche eines Dokuments aufgebracht werden. Durch das Bereitstellen beider Spiegelanordnungen können in einem Dokumentenbearbeitungssystem somit beide Arten von Kippbildern erzeugt werden, ohne, dass eine Umrüstung des Systems und ein Entfernen des zu bearbeitenden Dokuments aus dem System nötig wären.

In einer weiteren vorteilhaften Ausführungsform der Erfindung sind die erste und/oder die zweite Spiegelanordnung dazu ausgebildet im Betrieb der

Dokumentenbearbeitungseinrichtung derart modifiziert zu werden, dass die Position, an der die Strahlung auf das Dokument trifft, geändert werden kann. Unter einer Modifizierung im Betrieb wird dabei verstanden, dass das Dokument auf der Dokumententrägervorrichtung verbleiben kann und diese auch nicht bewegt werden muss, um die Modifizierung vorzunehmen. Durch diese Modifizierung wird eine Feinjustierung zur Aufbringung des sichtbaren Elements ermöglicht, wodurch die Qualität weiter verbessert werden kann.

Weiterhin vorteilhaft ist eine Ausführungsform des Dokumentenbearbeitungssystems, welches eine Verstellvorrichtung aufweist, welche dazu ausgebildet ist, die Position und Ausrichtung der wenigstens einen ersten Spiegelanordnung und/oder der wenigstens einen zweiten Spiegelanordnung derart zu ändern, dass der entsprechende definierte Winkel, unter dem die von der Strahlenquelle emittierte Strahlung auf das Dokument auftrifft, verändert wird, ohne die Position des Auftreffens der Strahlung auf dem Dokument zu verändern. Die Änderung der Position des Auftreffens der Strahlung auf dem Dokument wird in einer derartigen Ausführungsform rein über die Dokumententrägervorrichtung vorgenommen, welche die Position des Dokuments ändert. Durch die Verstellvorrichtung kann der Auftreffwinkel der Strahlung auf das Dokument eingestellt werden und somit das Dokumentenbearbeitungssystem auf unterschiedliche Anforderungen des zu bearbeitenden Dokuments, welche beispielsweise aus der Materialwahl oder Kundenanforderungen beruhen, eingestellt werden. Zudem ist ein Umrüsten auf unterschiedliche Produkte durch Verstellung der Spiegelanordnungen vereinfacht. Weiterhin kann durch eine derartige Ausführungsform verhindert werden, dass eine Anpassung der Software zur Erzeugung eines Kippbilds erfolgen muss, da ein symmetrischer Aufbau einer Spiegelanordnung aus zwei sich gegenüberliegenden Spiegeln zur Erzeugung des Kippbilds vorliegt.

Insbesondere bevorzugt ist eine derartige Ausführungsform, wenn die Verstellvorrichtung Aufnahmen, insbesondere in Form von Öffnungen aufweist, welche dazu ausgebildet sind, entsprechende an der wenigstens einen ersten Spiegelanordnung und/oder wenigstens einen zweiten Spiegelanordnung (22) angeordneten Gegenelemente zur Befestigung der entsprechenden Spiegelanordnung aufzunehmen. Durch eine derartige Ausführungsform kann eine Möglichkeit der Verstellvorrichtung bereitgestellt werden, welche einfach zu bedienen ist und das Risiko einer Fehlbedienung minimiert. Zudem ist sie technisch leicht umzusetzen.

In einer weiteren vorteilhaften Ausführungsform der Erfindung ist die Dokumententrägervorrichtung auf einem Kreuztisch angeordnet, welcher dazu ausgebildet ist, die Dokumententrägervorrichtung in zwei insbesondere aufeinander senkrecht stehende Raumrichtungen zu bewegen, wobei die Bewegung des Kreuztischs insbesondere durch Linearmotoren ausgeübt wird. Derartige Kreuztische sind insbesondere aus dem Bereich der Fräsmaschinen oder Bohrmaschinen bzw. auch von Mikroskopen bekannt. Dabei werden üblicherweise zwei Führungen senkrecht aufeinander angeordnet, wobei der Tisch auf der ersten Führung in einer ersten Raumrichtung bewegbar angeordnet ist und die erste Führung auf einer auf die erste Führung senkrecht stehenden zweiten Führung angeordnet ist, wobei die erste Führung in der zweiten Führung entlang der zweiten Raumrichtung verfahrbar ist. Somit kann ein auf dem Tisch aufgebrachter Gegenstand in der durch die beiden Raumrichtungen aufgespannten Ebene (meist horizontale Ebene) verfahren werden.

Das erfindungsgemäße Verfahren zur Bearbeitung eines Dokuments anhand der geschilderten erfindungsgemäßen Ausführungsform des Dokumentenbearbeitungssystems weist zunächst den Bearbeitungsschritt des Verfahrens der Dokumententrägervorrichtung in eine Aufnahmeposition auf. In dieser Position wird ein zu bearbeitendes Dokument auf der Dokumentenaufnahme der Dokumententrägervorrichtung platziert. Anschließend wird die Dokumententrägervorrichtung entlang einer ersten Raumrichtung und entlang einer zweiten Raumrichtung verfahren, bis sich das Dokument in einer ersten Bearbeitungsposition innerhalb eines Bearbeitungsbereichs des Dokumentenbearbeitungssystems befindet. An dieser Position findet die Bearbeitung des Dokuments statt. Die erste Raumrichtung und die zweite Raumrichtung sind dabei nicht identisch. Zuletzt wird die Dokumententrägervorrichtung in eine Ausgabeposition verfahren, in der das Dokument der Dokumentenaufnahme entnommen wird. Die Ausgabeposition kann dabei der Aufnahmeposition entsprechen.

In einem weiteren Verfahrensschritt, wird die Dokumententrägervorrichtung nach der Bearbeitung in der ersten Position in eine weitere Position verfahren, in der ebenfalls eine Bearbeitung des Dokuments erfolgt. Somit können verschiedene Bearbeitungen auf verschiedenen Positionen des Dokuments vorgenommen werden, ohne dass das Dokument aus dem Dokumentenbearbeitungssystem entnommen werden muss oder eine Veränderung der Anordnung vorgenommen werden muss.

In einer vorteilhaften Ausführungsform der Erfindung weist die Dokumententrägervorrichtung eine Heizvorrichtung auf, welche dazu ausgebildet ist, Wärme an das von der Dokumententrägervorrichtung aufgenommene Dokument abzugeben.

Durch das Einbringen von Wärme können beispielsweise Trocknungsvorgänge beschleunigt, bzw. besser kontrolliert werden, wodurch sowohl die Bearbeitungsgeschwindigkeit als auch die Bearbeitungsqualität der Dokumentenbearbeitungseinrichtung verbessert werden kann.

Insbesondere bevorzugt ist eine derartige Ausführungsform dann, wenn die Heizvorrichtung einen Aktuator aufweist, welcher dazu eingerichtet ist, eine Relativbewegung zwischen einem erwärmten Wärmeleitelement und der Dokumentenaufnahme zu bewirken. Durch die Relativbewegung, kann zwischen zwei Betriebsmodi gewechselt werden, wobei sich in einem ersten Betriebsmodus das Wärmeleitelement durch eine oder mehrere Aussparungen in der Dokumentenaufnahme hindurch erstreckt, um von der Heizeinrichtung erzeugte Wärme zumindest abschnittsweise auf das Dokument zu übertragen. Im zweiten Betriebsmodus weist das Heizelement gegenüber dem ersten Betriebsmodus einen größeren Abstand zum Dokument auf, sodass keine oder nur eine unwesentliche Menge an Wärme auf das Dokument übertragen wird.

Auf diese Weise kann das Heizelement dauerhaft erwärmt bleiben und für Bearbeitungsschritte, bei denen eine Erwärmung benötigt wird in den ersten Betriebsmodus versetzt werden und bei Bearbeitungsschritten, bei denen keine Erwärmung benötigt wird in den zweiten Betriebsmodus wechseln. Dadurch können Aufheiz- und Abkühlphasen übersprungen werden und die Bearbeitung der Dokumente beschleunigt werden.

Im Folgenden werden Ausführungsformen und vorteilhafte Aspekte der vorliegenden Erfindung unter Bezugnahme auf die beiliegenden Figuren näher erläutert. Sie zeigen:
- Fig. 1: zeigt eine schematische Abbildung einer Dokumententrägervorrichtung 12 von oben
- Fig. 2a: zeigt eine schematische Abbildung eines Ausschnitts eines Dokumentenbearbeitungssystems 10 gemäß dem Stand der Technik in einer ersten Konfiguration.
- Fig. 2b: zeigt eine schematische Abbildung eines Dokuments 51 mit einem ersten sichtbaren Element 551a.
- Fig. 3a: zeigt eine schematische Abbildung eines Ausschnitts eines Dokumentenbearbeitungssystems 10 gemäß dem Stand der Technik in einer zweiten Konfiguration.
- Fig. 3b: zeigt eine schematische Abbildung eines Dokuments 51 mit einem zweiten sichtbaren Element 551b.
- Fig. 4a: zeigt eine schematische Abbildung einer Ausführungsform eines erfindungsgemäßen Dokumentenbearbeitungssystems 10 in einer ersten Konfiguration.
- Fig. 4b: zeigt eine schematische Abbildung einer Ausführungsform eines erfindungsgemäßen Dokumentenbearbeitungssystems 10 in einer zweiten Konfiguration.
- Fig. 5a: zeigt eine zweite Ausführungsform eines erfindungsgemäßen Dokumentenbearbeitungssystems 10 in einer perspektivischen Ansicht
- Fig. 5b: zeigt den Bearbeitungsbereich 82 der in Fig. 5a gezeigten zweiten Ausführungsform
- Fig. 5c: zeigt eine Seitenansicht der in Fig. 5a gezeigten zweiten Ausführungsform der Erfindung in einer ersten Konfiguration
- Fig. 5d: zeigt eine Seitenansicht der in Fig. 5a gezeigten zweiten Ausführungsform der Erfindung in einer zweiten Konfiguration
- Fig. 5e: zeigt eine weitere Darstellung einer Seitenansicht der in Fig. 5a gezeigten zweiten Ausführungsform der Erfindung

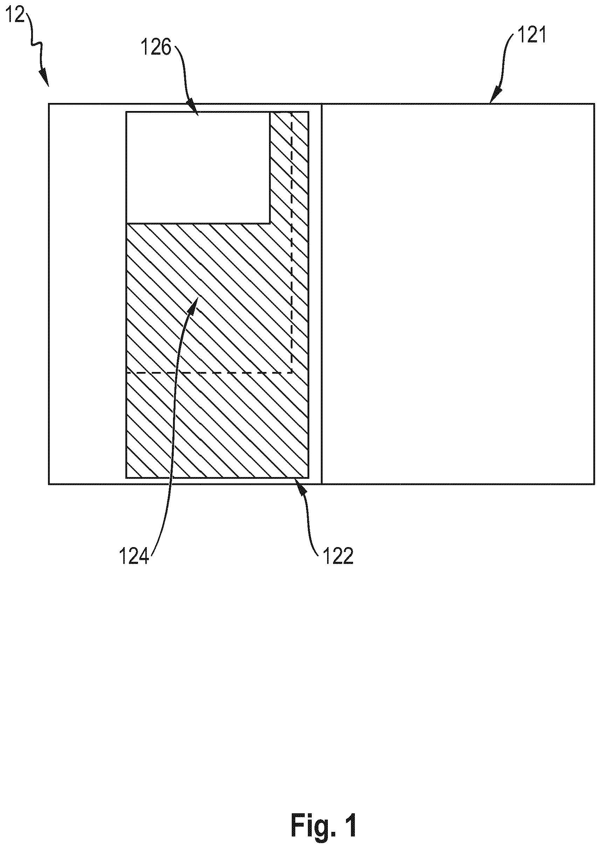

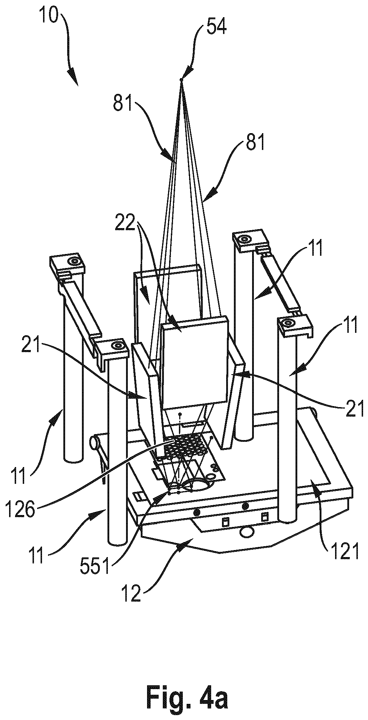

**Fig. 1** zeigt eine schematische Abbildung einer Dokumententrägervorrichtung 12 eines Dokumentenbearbeitungssystems 10 (nicht dargestellt in Fig. 1) von oben. Sie weist eine Dokumentenaufnahme 121 auf, welche insbesondere in Form einer Vertiefung in der Dokumententrägervorrichtung 12 vorgesehen ist. In diesen festgelegten Bereichen ist ein zu bearbeitendes Dokument 51 (nicht abgebildet in Fig. 1) für die Bearbeitung in einem Dokumentenbearbeitungssystem 10 (siehe Figs. 4a bis 5b) zu platzieren. Als Dokumentenaufnahme 121 ist das gesamte große Rechteck in der Figur zu verstehen. In der Dokumentenaufnahme 121 wiederum, auf der in Zeichenebene linken Seite befindet sich eine Bearbeitungsfläche 122, welche als schraffierter Bereich dargestellt ist. In diesem Bereich wird durch die Bearbeitung in einem Dokumentenbearbeitungssystem 10 ein sichtbares Element in das zu bearbeitende Dokument 51 eingebracht.

Die Dokumentenaufnahme 121 ist vorliegend derart ausgeführt, dass ein buchförmiges Dokument 51, wie beispielsweise ein Reisepass durch sie aufgenommen werden kann. Sie kann dabei ebenfalls einen Spalt in der Mitte aufweisen, in den der Buchrücken eines buchartigen Dokuments 51 aufgenommen werden kann. Auf der linken Seite der Dokumentenaufnahme 121 ist eine Kartenposition 124 angedeutet. Diese Kartenposition 124 kann beispielsweise durch eine weitere Vertiefung in der Dokumentenaufnahme 121 vorgesehen sein. Sie weist das genormte Format üblicher Kreditkarten, Ausweiskarte, Mitgliedskarten oder dergleichen auf. Durch die vorgesehenen entsprechenden Vertiefungen können die Karte oder das buchförmige Dokument auf der Dokumentenaufnahme 121 zumindest in seitlicher Richtung fixiert und so gegen ein Verrutschen gesichert werden.

Je nach zu bearbeitendem Dokument, wird dieses entweder in die Kartenposition 124 oder die Dokumentenaufnahme 121 eingelegt, wobei die Bearbeitung lediglich in der Bearbeitungsfläche 122 vorgenommen werden kann.

In einer vorteilhaften Ausführungsform wird ein buchförmiges Dokument auf die Dokumentenaufnahme 121 aufgelegt und durch eine Maske (nicht dargestellt), welche eine Aussparung für die Bearbeitungsfläche 122 des Dokuments hat, von oben auf die Dokumentenaufnahme 121 gedrückt, bis die Maske in einer bestimmten Position einrastet und so das Dokument flach auf der Dokumentenaufnahme 121 fixiert. Beide Seiten der Dokumentenaufnahme 121 sind dabei unabhängig voneinander gefedert. Je nach Seitenzahl des buchförmigen Dokuments wird eine Seite der Dokumentenaufnahme 121 möglicherweise stärker durch das Aufbringen der Maske belastet, was jedoch durch die unabhängige Lagerung der beiden Seiten ausgeglichen werden kann, sodass die Oberfläche des Dokuments eben zur Bearbeitung auf einer definierten Höhe vorliegt.

Um ein kartenförmiges Dokument in die Dokumententrägervorrichtung einzuspannen, wird ein Kartenadapter benötigt. Dieser hat die äußeren Maße des buchförmigen Dokuments und wird ebenso wie dieser auf die Dokumentenaufnahme 121 geklemmt. In diesen Adapter wiederrum wird nun das kartenförmige Dokument eingelegt. Leichte Fehler beim Einlegen der Dokumente werden über eine Software ausgeglichen. Hierbei misst eine Kamera eine mögliche Verdrehung und falsche Position aus und leitet sie an die Software weiter. Diese gleicht die Ungenauigkeiten aus und gibt die korrigierten Daten der an das Bearbeitungssystem weiter.

Innerhalb der Bearbeitungsfläche 122 ist ein Heizelement 126 angedeutet, welches dazu ausgebildet ist lokal Wärme auf das zu bearbeitende Dokument aufzubringen. Dies kann förderlich für einzelne Bearbeitungsschritte, beispielsweise zur Trocknung von Tinte oder ähnlichem sein. Daher ist das Heizelement 126 vorzugsweise in den Bereichen vorgesehen, in denen bei der Bearbeitung Tinte aufgebracht wird. Dies ist bei sicherheitskritischen Dokumenten üblicherweise zur Darstellung eines Passbildes der Fall. Somit befindet sich das Heizelement 126 vorzugsweise an der Stelle eines Passbildes eines Dokuments.

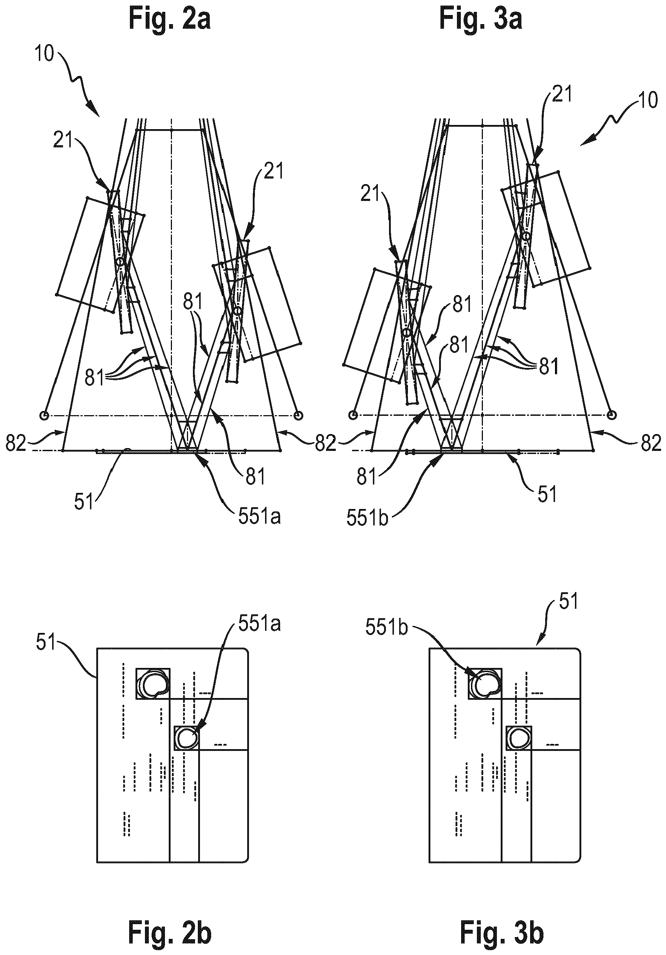

Die **Figs. 2a** und **3a** zeigen eine Ausführungsform eines Dokumentenbearbeitungssystems 10 gemäß dem Stand der Technik in zwei unterschiedlichen Konfigurationen. In einem Bearbeitungsbereich 82 ist eine erste Spiegelanordnung 21 angeordnet, welche die Laserstrahlen 81 einer Strahlenquelle (nicht dargestellt) auf ein zu bearbeitendes Dokument 51 lenkt. Auf die Darstellung der Befestigung der Spiegelanordnung 21 wird der Übersichtlichkeit halber verzichtet.

Die Spiegelanordnung 21 ist dabei in der ersten Konfiguration der Fig. 2a derart angeordnet, dass die Laserstrahlen 82 ein erstes sichtbares Element 551a auf einer bestimmten Position der Oberfläche des Dokuments 51 erzeugen. Das entsprechende Dokument 51 ist dabei in Fig. 2b in einer Draufsicht (Ansicht von oben) abgebildet, wo das erste sichtbare Element 551a an der definierten Position angedeutet ist. Die horizontale Achse des Dokuments 51 verläuft dabei in Zeichenebene von oben nach unten, während die vertikale Achse in Zeichenebene von links nach rechts verläuft.

Im Gegensatz dazu ist die Anordnung der ersten Spiegelanordnung 21 in Fig. 3a gemäß der zweiten Konfiguration derart modifiziert, dass nun die Laserstrahlen 82 auf eine andere Position auf der Oberfläche des Dokuments 51 geleitet werden als in der in Fig. 2a gezeigten Anordnung, wodurch ein zweites sichtbares Element 551b auf dem Dokument 51 sichtbar wird, wie Fig. 3b zeigt.

Die Änderung der Anordnung der Spiegelanordnung 21 ist dabei bei Dokumentenbearbeitungssystemen 10 gemäß dem Stand der Technik mit einigem Aufwand verbunden. So muss zunächst das Dokument 51 entfernt werden, bevor die Anordnung der Spiegelanordnung 21 verändert werden kann. Häufig muss zur Überprüfung der neuen Anordnung zusätzlich eine Kalibrierung bzw. ein Testlauf unternommen werden, wodurch die Bearbeitung und Erstellung zwei verschiedener sichtbarer Elemente 551a, 551b an zwei verschiedenen Positionen häufig zu einem langwierigen Prozess wird.

**Fig. 4a** zeigt ein erfindungsgemäßes Dokumentenbearbeitungssystem 10 in einer ersten Konfiguration. Das Dokumentenbearbeitungssystem 10 weist eine Dokumententrägervorrichtung 12 auf, welche wiederum eine Dokumentenaufnahme 121 aufweist, welche der schematischen Darstellung aus Fig. 1 entspricht. In der Dokumentenaufnahme 121, in welcher das zu bearbeitende Dokument 51 platziert wird, ist eine Heizeinrichtung 126 vorgesehen, welche in der Fig. 4a durch Löcher in der Oberfläche der Dokumentenaufnahme 121 angedeutet ist. In dieser Ausführungsform ist die Heizeinrichtung 126 durch ein Heizelement gegeben, welches in Teilen aus den Löchern durch einen Aktuator herausgefahren werden kann, um somit Wärme an ein darauf befindliches Dokument 51 abzugeben. Wird keine Wärmezufuhr benötigt wird das Heizelement wieder abgesenkt, sodass eine Wärmezufuhr weitestgehend unterbunden wird.

Das Dokumentenbearbeitungssystem 10 weist weiterhin eine Dokumentenbearbeitungseinrichtung 11 auf, welche eine erste Spiegelanordnung 21, eine zweite Spiegelanordnung 22 und eine Strahlenquelle 54, in Form eines Lasers umfasst. Durch den Laser emittierten Laserstrahlen 81 werden zur Erzeugung eines sichtbaren Elements 551 in Form eines Kippbilds auf die Oberfläche des auf der Dokumentenaufnahme 121 liegenden Dokuments 51 (nicht abgebildet) geleitet. Zur Erzeugung eines Kippbilds müssen dazu die Laserstrahlen 81 unter einem bestimmten Winkel auf die Oberfläche des Dokuments 51 treffen. Hierzu werden die beiden Spiegelanordnungen 21, 22 eingesetzt.

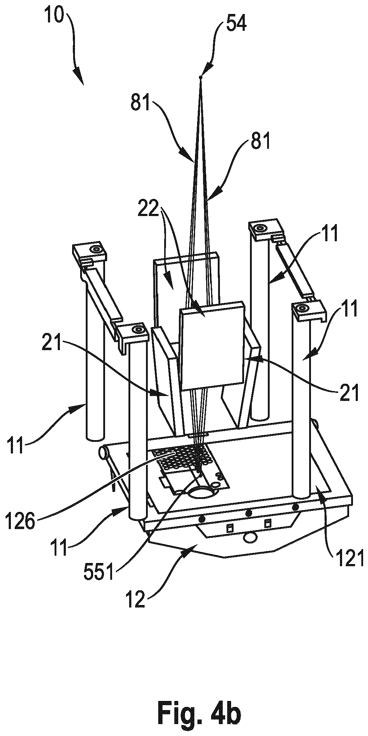

Die Spiegelanordnungen 21, 22 sind dabei in einem Winkel von 90 Grad verdreht zueinander angeordnet. Somit treffen auch die von ihnen geleiteten Laserstrahlen unter einem Winkel von 90 Grad versetzt zueinander auf die Oberfläche auf. Während die erste Spiegelanordnung 21 ein Kippbild, welches beim Kippen des Dokuments 51 um die horizontale Achse sichtbar wird, erzeugt (MLI-Element, siehe Fig. 4a), kann durch die zweite Spiegelanordnung 22 ein Kippbild, welches beim Kippen des Dokuments 51 um die vertikale Achse sichtbar wird, in das Dokument 51 eingebracht werden (CLI-Element, siehe Fig. 4b).

Durch die beschriebene Anordnung ist es also möglich sowohl MLI-Elemente als auch CLI-Elemente in einer Anordnung in das Dokument ohne Umrüsten des Systems einzubringen.

Fig. 4a zeigt dabei die Dokumententrägervorrichtung 12 in einer ersten Bearbeitungsposition. Dies entspricht der ersten Konfiguration des Dokumentenbearbeitungssystems 10. Die Bearbeitungsposition ist diejenige Position der Dokumententrägervorrichtung 12 in der die Bearbeitung erfolgen, also das sichtbare Element 551 auf das Dokument 51 aufgebracht werden soll.

**Fig. 4b** zeigt die gleiche Anordnung wie Fig. 4a, wobei sich lediglich die Position des zu erzeugenden sichtbaren Elements 551 in Form des Kippbilds geändert hat und die durch die zweite Spiegelanordnung geleitete Laserstrahlen 82 abgebildet sind. Dies wird auch daran deutlich, dass das sichtbare Element 551 im Vergleich zu Fig. 4a um 90 Grad gedreht ist. Zur Änderung der Position des zu erzeugenden sichtbaren Elements 551 auf dem Dokument 51 kann erfindungsgemäß die Dokumententrägervorrichtung 12 unter der Dokumentenbearbeitungseinrichtung 11 in zwei Raumrichtungen verfahren werden, um so die Bearbeitungsposition zu verändern. Die Positionsänderung des aufzubringenden sichtbaren Elements 551 ergibt sich also durch die Änderung der Position der Dokumententrägervorrichtung 12 samt darauf angeordnetem Dokument 51 in Relation zur Dokumentenbearbeitungseinrichtung. Im Vergleich der beiden Fig. 4a und 4b wird deutlich, dass sich die Bearbeitungsposition verändert hat und somit auch die Position des aufzubringenden sichtbaren Elements 551 auf dem Dokument 51. Durch die Änderung der Position der Dokumententrägervorrichtung 12 befindet sich das Dokumentenbearbeitungssystem in Fig. 4b in der zweiten Konfiguration.

Die Bewegung der Dokumententrägervorrichtung 12 ist dabei durch ein Kreuztisch umgesetzt. Dieser umfasst die Dokumententrägervorrichtung 12, welche auf einer ersten Schiene angeordnet ist und auf dieser in eine Raumrichtung verfahren werden kann. Die erste Schiene wiederum ist auf einem Schlitten angeordnet, welcher selbst auf in einer zweiten Schiene entlang einer zweiten Raumrichtung verfahren werden kann. Somit kann die Dokumententrägervorrichtung 12 mittels der beiden Schienen in einer Ebene, welche durch die beiden Raumrichtungen aufgespannt wird, verfahren werden. Die Bewegung wird dabei vorzugsweise durch entsprechende Aktuatoren wie Linearmotoren oder ähnliches umgesetzt.

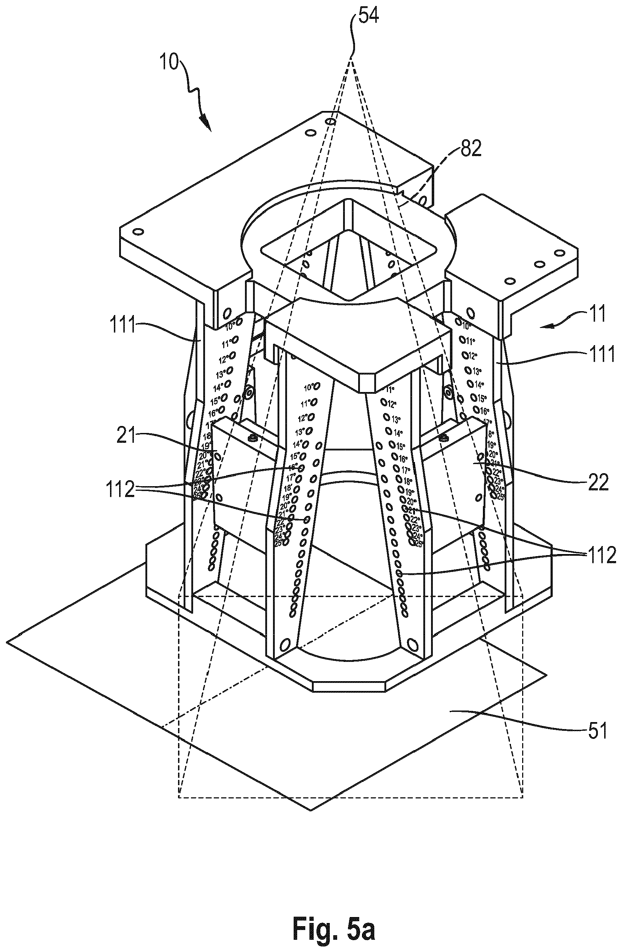

**Fig. 5a** zeigt eine zweite Ausführungsform eines erfindungsgemäßen Dokumentenbearbeitungssystems 10 in einer perspektivischen Ansicht. Es umfasst dabei eine Dokumentenbearbeitungseinrichtung 11 und eine Dokumententrägervorrichtung, welche allerdings in der gezeigten Abbildung nicht dargestellt ist. Auf der Dokumententrägervorrichtung ist ein Dokument 51 abgebildet. Die Dokumententrägervorrichtung ist, wie in der zuvor beschriebenen Ausführungsform, als Kreuztisch ausgebildet, welcher das Dokument 51 in der Ebene verfahren kann, um so die Position des Dokuments 51 im Verhältnis zur Dokumentenbearbeitungseinrichtung 11 zu verändern.

Weiterhin ist eine Strahlenquelle 54 vorgesehen, welche in der Lage ist Laserstrahlen innerhalb eines Bearbeitungsbereichs 82 zu emittieren. Der Bearbeitungsbereich 82 weist dabei eine rechteckige, in der gezeigten Ausführungsform insbesondere quadratische Querschnittsform auf und ist durch die gestrichelten Linien angedeutet.

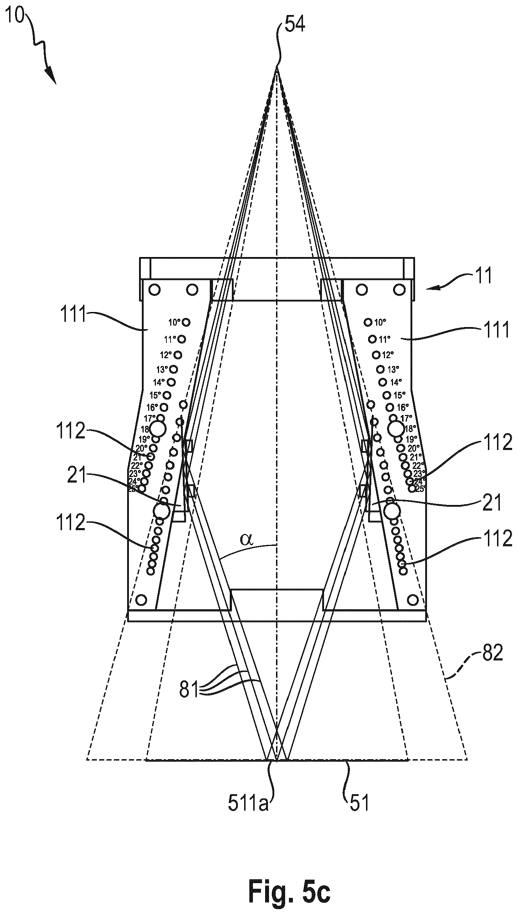

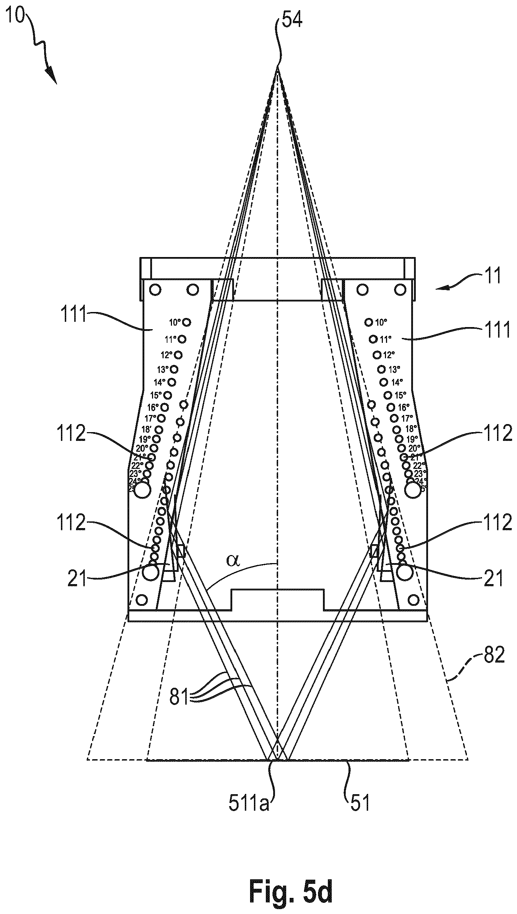

Die im Bearbeitungsbereich 82 emittierte Strahlung kann weiterhin durch zwei Spiegelanordnungen 21, 22 auf das Dokument 51 geleitet werden (siehe auch Fig. 5c und 5d). Die Spiegelanordnungen 21, 22 bestehen jeweils aus zwei sich gegenüberliegenden Spiegeln und sind zwischen Trägerelementen 111 der Dokumentenbearbeitungseinrichtung 11 angeordnet. Die Spiegelanordnungen 21, 22 sind jeweils parallel zur Längs- bzw. Querrichtung des viereckigen, insbesondere parallelogrammförmigen Dokuments 51 angeordnet. Die Trägerelemente111 weisen jeweils Öffnungen auf, in welche entsprechende an den Spiegeln angeordnete Gegenelemente eingreifen. Die Spiegel können aus den Öffnungen entnommen und in andere dafür vorgesehene Öffnungen eingesetzt werden, um die Position des entsprechenden Spiegels und gleichzeitig dessen Orientierung zu ändern. Die Öffnungen sind somit als Verstellvorrichtung 112 zu verstehen.

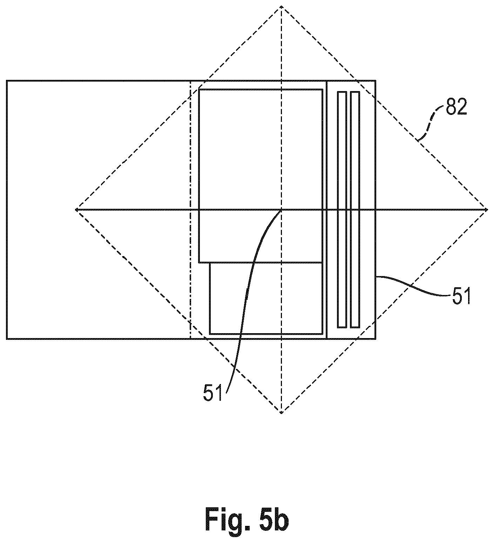

Zunächst soll im Folgenden auf den Bearbeitungsbereich unter Bezugnahme auf die Figuren 5a und 5b näher eingegangen werden. **Fig. 5b** zeigt den Bearbeitungsbereich 82 der in Fig. 5a gezeigten zweiten Ausführungsform in einer Draufsicht. Der Bearbeitungsbereich 82 ist dabei gegenüber dem Dokument 51 um 45 Grad gedreht. Dadurch ist es möglich die Spiegelanordnungen 21, 22 weiter außen zu positionieren, sodass sie immer noch im Bearbeitungsbereich 82 liegen, aber den direkten Weg zwischen Strahlenquelle 54 und Dokument 51 nicht versperren, um so die Möglichkeit zu schaffen ohne Umbau der Spiegelanordnungen 21, 22 anhand der Strahlenquelle Personalisierungen auf dem Dokument 51 vorzunehmen (ohne Nutzung der Spiegelanordnungen 21, 22). Entsprechend kann durch die Drehung des Bearbeitungsbereichs 82 dieser vollständig ausgenutzt werden. Alternativ könnte ebenfalls eine Strahlenquelle 54 mit einem größeren Bearbeitungsbereich 82 eingesetzt werden, wodurch allerdings größere Gefahren durch die erzeugbare Strahlung (insbesondere Laserstrahlung) entstehen, welche entsprechend aufwändig eingedämmt werden müssen.

Die **Fig. 5c** und **5d** zeigen eine Seitenansicht der in Fig. 5a gezeigten zweiten Ausführungsform der Erfindung in einer ersten Konfiguration bzw. zweiten Konfiguration. Die Konfigurationen unterscheiden sich dadurch, dass die abgebildete erste Spiegelanordnung 21 unterschiedlich positioniert ist. Es sei an dieser Stelle angemerkt, dass die Abbildung ebenso eine Seitenansicht mit der zweiten Spiegelanordnung 22 darstellen könnte.

Eine durch die Strahlenquelle 54 im Bearbeitungsbereich 82 emittierte Strahlung 81 wird durch die erste Spiegelanordnung auf das Dokument 51 geleitet. Die Spiegel der ersten Spiegelanordnung 21 sind dabei symmetrisch angeordnet, das heißt, sie befinden sich auf der gleichen Höhe (Position) über dem Dokument 51 und reflektieren die Strahlung 81 im gleichen Winkel auf die Oberfläche des Dokuments 51. Dieser Winkel wird als erster definierter Winkel *α* bezeichnet und legt fest unter welchem Winkel ein auf diese Weise eingeprägtes erstes sichtbares Element 551a zu sehen ist. Die Wahl des Winkels hängt dabei insbesondere von der Wahl des Materials des Dokuments 51 sowie den spezifischen Kundenanforderungen ab.

Beim Vergleich der beiden in den Figuren 5c und 5d gezeigten Konfigurationen fällt auf, dass die erste Spiegelanordnung 21 in der in Fig. 5c gezeigten ersten Konfiguration höher angeordnet ist als in der in Fig. 5d gezeigten zweiten Konfiguration und somit der Winkel *α* unter welchem die Strahlung auf das Dokument 51 geleitet wird anders sind. Die Höhenverstellung wird durch die Verstellvorrichtung 112 vorgenommen. Eine Konfiguration ist somit durch eine definierte Position der ersten Spiegelanordnung 21 definiert. Durch die entsprechende Definition der Öffnungen wird ebenfalls die Ausrichtung der Spiegel bestimmt, dass der Winkel *α* in dem die Strahlung auf das Dokument 51 trifft, reproduzierbar an eine Position der Spiegel geknüpft ist. Vorzugsweise sind zum besseren Verständnis die Öffnungen beschriftet, um die Bedienung und Einstellung der Konfigurationen zu vereinfachen. Die Änderung des Winkels *α* unter dem die Strahlung auf das Dokument 51 trifft kann somit durch die unterschiedlichen Konfigurationen eingestellt werden, wobei die Spiegel einer Spiegelanordnung immer symmetrisch verstellt werden. Die Verstellvorrichtung kann dabei automatisiert umgesetzt sein oder auf manuelle Durchführung der Änderung der Konfiguration angewiesen sein.

Im Gegensatz zu der in Fig. 2a und 2b dargestellten Ausführungsform wird die Position des zu erstellenden sichtbaren Elements 551a, 551b durch die Änderung der Position des Dokuments 51 anhand der Dokumententrägervorrichtung 12 vorgenommen. Das zu erstellende sichtbare Element 551a, 551b wird also von der Dokumentenbearbeitungseinrichtung 11 aus immer an der gleichen Stelle erzeugt. Die Position des zu erstellenden sichtbaren Elements 551a, 551b auf dem Dokument 51 wird durch die Dokumententrägervorrichtung 12 eingestellt. Dabei wird das zu erzeugende sichtbare Element 551a, 551b mittig unter dem Dokumentenbearbeitungssystem 10 erzeugt. Auf diese Weise kann erzielt werden, dass keine Einstellung der Software bei Änderung der Spiegelausrichtung und Position notwendig ist. Dadurch kann eine einfache Umstellung des Dokumentenbearbeitungssystems 10 auf unterschiedliche Dokumenten 51 mit unterschiedlichen Anforderungen und Materialien realisiert werden.

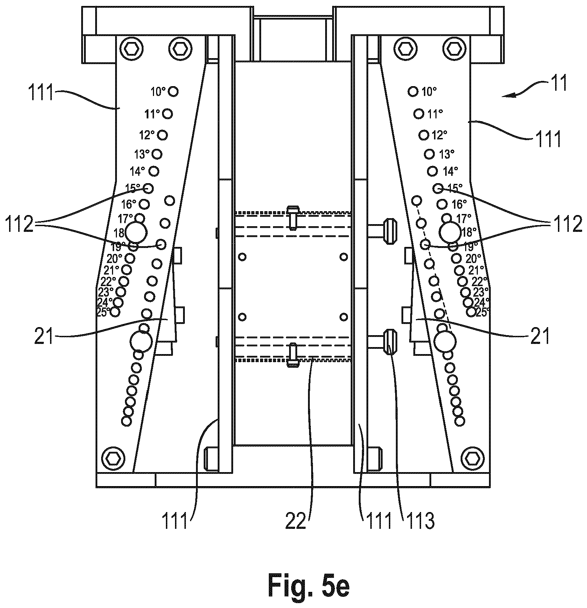

In Bezug auf Fig. 5e wird im Folgenden die Verstellvorrichtung 112 der Spiegelanordnungen näher beschrieben. Fig. 5e zeigt die in den Figuren 5c und 5d abgebildete Anordnung, wobei neben der ersten Spiegelanordnung 21 ebenfalls die zweite Spiegelanordnung 22 dargestellt ist, wobei jeder Spiegel der Spiegelanordnung 22 an zwei Trägerelementen 111 befestigt ist. Die Befestigung erfolgt mittels der Verstellvorrichtung 112. Dazu werden Gegenelemente 113 in Form von Stiften in dafür an den Trägerelementen 111 vorgesehene Öffnungen, insbesondere Passbohrungen, in Zeichenebene der Figur von rechts nach links eingeführt. Der entsprechend befestigte Spiegel kann dadurch mit einer hohen Genauigkeit gelagert werden. Die Gegenelemente 113 werden anhand einer Klemmung durch in einer an der Rücksteite des Spiegels angeordneten Anlegeplatte befindlichen Federdruckstifte fixiert. Diese fixieren die Gegenelemente im montierten Zustand. Die Gegenelemente 113 erstrecken sich dabei von einer Seite durch das erste Trägerelement 111 durch die Anlegeplatte des Spiegels bis zum zweiten Trägerelement 111. Es sind weiterhin Ausführungsformen der Erfindung möglich, bei denen von beiden Seiten entsprechende Gegenelemente 113 eingesetzt werden. Die Gegenelemente 113 können in beiden Ausführungsformen sowohl mit einem Gewinde ausgestattet sein, um eine Verschraubung in einem der Trägerelemente zu ermöglichen, als auch als glatte Stifte ausgeführt sein.

Durch die beschriebene Ausführungsform der Verstellvorrichtung 112 kann somit der entsprechende Spiegel in der richtigen Höhe, als auch mit dem richtigen Winkel positioniert werden, da durch die vorgegebenen Öffnungen ebenfalls die Orientierung beeinflusst werden kann.

### BEZUGSZEICHENLISTE

- 10: Dokumentenbearbeitungssystem
- 11: Dokumentenbearbeitungseinrichtung
- 111: Trägerelement
- 112: Verstellvorrichtung
- 113: Gegenelement
- 12: Dokumententrägervorrichtung
- 121: Dokumentenaufnahme
- 122: Bearbeitungsfläche
- 123: Aussparung
- 124: Kartenposition
- 126: Heizeinrichtung
- 21: erste Spiegelanordnung
- 22: zweite Spiegelanordnung
- 51: Dokument
- 54: Strahlenquelle
- 551: sichtbares Element
- 551a: erstes sichtbares Element
- 551b: zweites sichtbares Element
- 81: Laserstrahlen
- 82: Bearbeitungsbereich
- α: erster definierter Winkel

## Patentansprüche

1. Dokumentenbearbeitungssystem (10), insbesondere zur Bearbeitung von Sicherheitsdokumenten, aufweisend,
wenigstens eine Dokumententrägervorrichtung (12) mit einer Dokumentenaufnahme (121), dazu konfiguriert ein zu bearbeitendes Dokument (51) aufzunehmen und zu transportieren,
eine Dokumentenbearbeitungseinrichtung, dazu konfiguriert das Dokument (51) in einem bestimmten Bearbeitungsbereich (82) zu bearbeiten,
wobei die Dokumententrägervorrichtung (12) dazu ausgebildet ist, das Dokument (51) in zwei Raumrichtungen innerhalb des Dokumentenbearbeitungssystems (10) zu bewegen.

2. Dokumentenbearbeitungssystem (10) gemäß dem vorhergehenden Anspruch, wobei die Dokumentenbearbeitungseinrichtung wenigstens eine Strahlenquelle (54) aufweist und insbesondere dazu ausgebildet ist, Kippbilder auf das Dokument (51) aufzubringen.

3. Dokumentenbearbeitungssystem (10) gemäß dem vorhergehenden Anspruch, wobei die Strahlenquelle (54) Laserstrahlen (81) in einem viereckigen Bearbeitungsbereich (82) emittiert und das Dokument (51) ebenfalls eine viereckige Form aufweist, wobei weiterhin der Bearbeitungsbereich (82) gegenüber dem Dokument (51) um einen definierten Winkel, insbesondere 45 Grad, gedreht ist.

4. Dokumentenbearbeitungssystem (10) gemäß einem der beiden vorhergehenden Ansprüche, wobei die Dokumentenbearbeitungseinrichtung wenigstens eine erste Spiegelanordnung (21) aufweist, welche dazu ausgebildet ist, die von der Strahlenquelle (54) emittierte Strahlung jeweils unter einem ersten definierten Winkel und/oder aus einer ersten definierten Richtung auf das Dokument (51) zu leiten.

5. Dokumentenbearbeitungssystem (10) gemäß dem vorhergehenden Anspruch, wobei die Dokumentenbearbeitungseinrichtung eine zweite Spiegelanordnung (22) aufweist, welches dazu ausgebildet ist, die von der Strahlenquelle (54) emittierte Strahlung jeweils unter einem zweiten definierten Winkel und/oder aus einer zweiten definierten Richtung auf das Dokument (51) zu leiten, wobei die zweite definierte Richtung der zweiten Spiegelanordnung (22) um 90 Grad zur ersten definierten Richtung der ersten Spiegelanordnung (21) versetzt ist.

6. Dokumentenbearbeitungssystem (10) gemäß einem der beiden vorhergehenden Ansprüche, wobei die erste Spiegelanordnung (21) und/oder die zweite Spiegelanordnung (22) dazu ausgebildet sind, im Betrieb der Dokumentenbearbeitungseinrichtung derart modifiziert werden zu können, dass die Position, an der die Strahlung auf das Dokument trifft, geändert werden kann.

7. Dokumentenbearbeitungssystem (10) gemäß einem der vorhergehenden Ansprüche 2 bis 6, wobei das Dokumentenbearbeitungssystem (10) eine Verstellvorrichtung (112) aufweist, welche dazu ausgebildet ist, die Position und Ausrichtung der wenigstens einen ersten Spiegelanordnung (21) und/oder der wenigstens einen zweiten Spiegelanordnung (22) derart zu ändern, dass der entsprechende definierte Winkel, unter dem die von der Strahlenquelle (54) emittierte Strahlung auf das Dokument (51) auftrifft, verändert wird, ohne die Position des Auftreffens der Strahlung auf dem Dokument (51) zu verändern.

8. Dokumentenbearbeitungssystem (10) gemäß dem vorhergehenden Anspruch, wobei die Verstellvorrichtung (112) Aufnahmen, insbesondere in Form von Öffnungen, aufweist, welche dazu ausgebildet sind entsprechende an der wenigstens einen ersten Spiegelanordnung (21) bzw. der wenigstens einen zweiten Spiegelanordnung (22) angeordnete Gegenelemente (113) zur Befestigung der entsprechenden Spiegelanordnung (21, 22) aufzunehmen.

9. Dokumentenbearbeitungssystem (10) gemäß einem der vorhergehenden Ansprüche, wobei die Dokumententrägervorrichtung (12) auf einem Kreuztisch angeordnet ist, welcher dazu ausgebildet ist, die Dokumententrägervorrichtung (12) in zwei insbesondere aufeinander senkrecht stehenden Raumrichtungen zu bewegen, wobei zur Bewegung der Kreuztische insbesondere Linearmotoren vorgesehen sind.

10. Dokumentenbearbeitungssystem (10) gemäß einem der vorhergehenden Ansprüche, wobei die Dokumententrägervorrichtung (12) eine Heizeinrichtung (126) aufweist, welche dazu ausgebildet ist, Wärme an das von der Dokumententrägervorrichtung (12) aufgenommene Dokument (51) abzugeben.

11. Dokumentenbearbeitungssystem (10) gemäß dem vorhergehenden Anspruch, wobei die Heizeinrichtung (126) einen Aktuator aufweist, welcher dazu ausgerichtet ist eine Relativbewegung zwischen einem Wärmeleitelement und der Dokumentenaufnahme (121) zu bewirken, um zwischen einem ersten Betriebsmodus und einem zweiten Betriebsmodus der Dokumententrägervorrichtung (12) zu wechseln, wobei in dem ersten Betriebsmodus sich das Wärmeleitelement durch eine oder mehrere Aussparungen in der Dokumentenaufnahme (121) hindurch erstreckt, um von der Heizeinrichtung (126) erzeugte Wärme zumindest abschnittsweise auf das Dokument (51) übertragen zu können; und
wobei in dem zweiten Betriebsmodus das Wärmeleitelement einen gegenüber seiner Lage im ersten Betriebsmodus vergrößerten Abstand vom Dokument (51) aufweist.

12. Verfahren zur Bearbeitung eines Dokuments (51) in einem Dokumentenbearbeitungssystem (10) gemäß einem der vorhergehenden Ansprüche, aufweisend die folgenden Schritte
Verfahren einer Dokumententrägervorrichtung (12) in eine Aufnahmeposition, in welcher ein Dokument (51) auf einer Dokumentenaufnahme (121) der Dokumententrägervorrichtung (12) platziert wird,
Verfahren der Dokumententrägervorrichtung (12) entlang einer ersten Raumrichtung und einer zweiten Raumrichtung in eine erste Bearbeitungsposition innerhalb eines Bearbeitungsbereichs (82) des Dokumentenbearbeitungssystems (10), in welcher das Dokument (51) bearbeitet wird, wobei die erste Raumrichtung und die zweite Raumrichtung nicht identisch sind,
Verfahren der Dokumententrägervorrichtung (12) in eine Ausgabeposition, in welcher das Dokument (51) von der Dokumentenaufnahme (121) entnommen wird.
